# EUROPEAN PATENT APPLICATION

(11) **EP 4 850 981 A1**
(43) Date of publication of application: **09.12.2026**
(21) Application number: 26183083.0
(22) Date of filing: 04.06.2026
(51) Int. Cl.: B60Q 1/00, B60Q 1/14, B60Q 1/48

(54) **METHOD FOR OPERATING THE LIGHTS OF A ROAD CAR**

(30) Priority: 06.06.2025 IT 202500013267
(71) Applicant: FERRARI S.p.A., 41100 Modena (IT)
(72) Inventor: TAMMARO, Marco, 41100 MODENA (IT); CUCCIOLLA, Giorgio, 41100 MODENA (IT); FOSSALUZZA, Antonio, 41100 MODENA (IT); RANDAZZO, Stefano, 41100 MODENA (IT); WOLFF, Alessandro, 41100 MODENA (IT)
(74) Representative: Studio Torta S.p.A.

(57) **Abstract**

A method for operating the lights of a road car, according to which two operating buttons (7, 8) control the switching on and off of two different lighting systems (5, 6) of the road car, when the road car is in an on state, and control the switching on and off of at least one left parking light (4) and at least one right parking light (4) of the road car, when the road car is in an off state.

## Description

### CROSS-REFERENCE TO RELATED APPLICATIONS

This patent application claims priority from Italian patent application no. 102025000013267 filed on June 6, 2025, the entire disclosure of which is incorporated herein by reference.

### TECHNICAL FIELD

The invention relates to a method for operating the lights of a road car.

### BACKGROUND

Currently known road cars comprise a plurality of turn signals; a control lever for controlling the turn signals; an electrical system configured to power a plurality of utilities of the road car such as, for example, an ignition device, a lighting system, an infotainment system, an air conditioning system; and a plurality of parking lights to signal the position of the road car when the road car is in an off state, in which the electric system is deactivated.

The road car is further provided with an operating button to cause the switching on of the parking lights associated with the right side of the road car and, at the same time, of the parking lights associated with the left side of the road car.

When the road car is in the off state, the driver first causes, by means of the operating button, the switching on of all the parking lights, namely the parking lights on the right side and the parking lights on the left side, and then selects, by means of the control lever, the parking lights on the right side or the parking lights on the left side.

The switching off the parking lights is obtained either by means of the operating button or by switching the road car to an on state, in which at least the electric system is activated.

Known road cars of the type described above suffer from some drawbacks, which are mainly due to the fact that the switching on of the parking lights implies the presence of the operating button and requires the driver to operate both the operating button to switch on the parking lights and the control lever of the turn signals to select the parking lights on the right side or the parking lights on the left side.

### SUMMARY

The object of the invention is to provide a method for operating the lights of a road car that does not suffer from the drawbacks discussed above and can be carried out in simple and economic fashion.

According to the invention, there is provided a method for operating the lights of a road car as claimed in the appended claims.

### BRIEF DESCRIPTION OF THE DRAWINGS

The invention will now be described with reference to the accompanying drawings showing a non-limiting embodiment thereof, wherein:
figure 1 is a schematic plan view of a preferred embodiment of the road car according to the invention shown in three different operating modes; and
figure 2 is a block diagram showing the operation of the road car of figure 1.

### DESCRIPTION OF EMBODIMENTS

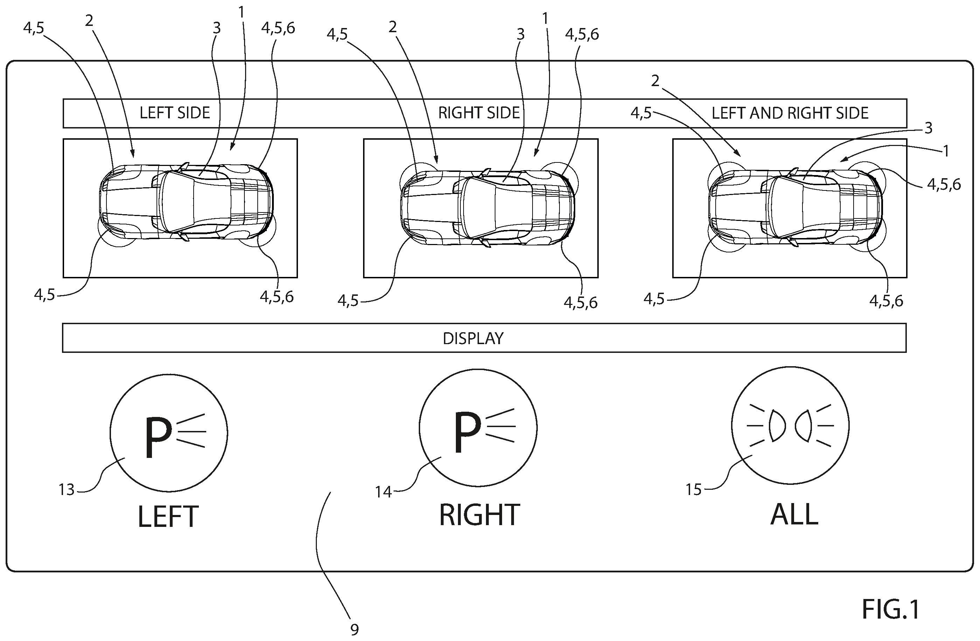

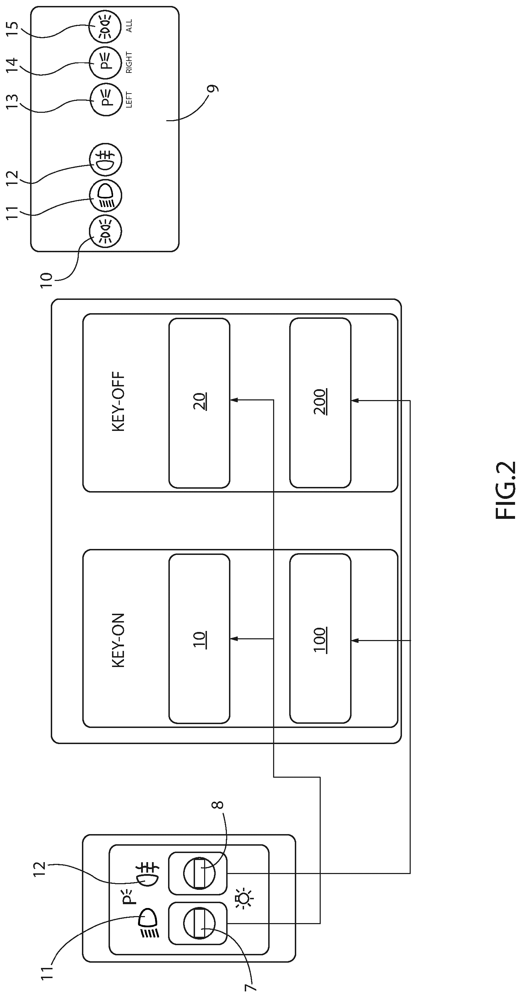

With reference to figures 1 and 2, number 1 indicates, as a whole, a road car comprising a support frame 2 defining at least part of a lower floor (not shown) of the road car 1 and a passenger compartment 3 mounted on the frame 2 and projecting upwards from the lower floor (not shown).

The road car 1 further comprises a plurality of lighting systems, in particular a plurality of front and rear parking lights 4 distributed on the right side and on the left side of the road car 1, a plurality of front and/or rear low beam lights 5 and at least one rear fog light 6.

The lighting systems mentioned above are electrically powered, together with further utilities of the road car 1 such as, for example, an ignition device, an infotainment system and an air conditioning system, by a known electric system that is not shown herein.

With reference to what described above, it should be pointed out that:
the road car 1 can switch between an on state (KEY ON in figure 2), in which at least the electric system (not shown) is activated, and an off state (KEY OFF in figure 2), in which the electric system (not shown) is deactivated; and
when the road car 1 is in the off state, the parking lights 4 act as lights used to signal the presence and position of the road car 1.

The passenger compartment 3 is further provided with a button 7 to control the switching on and off of the low beam lights 5, with a button 8 to control the switching on and off of the rear fog light 6 and with a button (not shown) to control the switching on and off of the parking lights 4.

The passenger compartment 3 further comprises a display 9 provided with a light indicator 10 to signal to the driver of the road car 1 the switching on of the parking lights 4, with a light indicator 11 to signal to the driver the switching on of the low beam lights 5 and with a light indicator 12 to signal to the driver the switching on of the rear fog light 6.

When the road car 1 is in the on state (KEY ON in figure 2), the method entails operating the button 7 (step 10 in figure 2) to control the switching on and off of the low beam lights 5 (indicated to the driver by the indicator 11) and operating the button 8 (step 100 in figure 2) to control the switching on and off of the rear fog light 6 (indicated to the driver by the indicator 12).

When the road car 1 is in the off state (KEY OFF in figure 2), the method entails operating the button 7 (step 20 in figure 2) to control the switching on and off of the parking lights 4 on the left side and/or operating the button 8 (step 200 in figure 2) to control the switching on and off of the parking lights 4 on the right side.

The switching on and off of the parking lights 4 on the left side is signalled to the driver by a light indicator 13 on the display 9, the switching on and off of the parking lights 4 on the right side is signalled to the driver by a light indicator 14 on the display 9 and the simultaneous switching on and off of both the parking lights 4 on the left side and the parking lights 4 on the right side is signalled to the driver by a light indicator 15 on the display 9.

The road car 1 has some advantages mainly due to the fact that the switching on and off of the parking lights 4 is directly controlled with the buttons 7 and 8, namely the buttons with which the road car 1 is provided to control the switching on and off of the low beam lights 5 and the rear fog light 6.

## Claims

1. A method for operating the lights of a road car, the method comprising the step of:
controlling, by means of two operating buttons (7, 8), two different lighting systems (5, 6) of the road car, when the road car is in an on state;
and being **characterized in that** it further comprises the step of:
controlling, by means of said operating buttons (7, 8), the switching on and off of at least one left parking light (4) and at least one right parking light (4), respectively, of the road car, when the road car is in an off state.

2. The method according to claim 1 and further comprising the step of:
switching on a first light indicator (11) to signal the switching on of a first lighting system (5).

3. The method according to claim 1 or 2 and further comprising the step of:
switching on a second light indicator (12) to signal the switching on of a second lighting system (6).

4. The method according to any one of the preceding claims and further comprising the step of:
switching on a third light indicator (13) to signal the switching on of the left parking light (4).

5. The method according to any one of the preceding claims and further comprising the step of:
switching on a fourth light indicator (14) to signal the switching on of the right parking light (4).

6. The method according to any one of the preceding claims, wherein a first operating button (7) is the button used to operate the low beam lights (5).

7. The method according to any one of the preceding claims, wherein a second operating button (8) is the button used to operate the rear fog lights (6).
